# EUROPEAN PATENT APPLICATION

(11) **EP 3 907 784 A1**
(43) Date of publication of application: **10.11.2021**
(21) Application number: 20802979.3
(22) Date of filing: 09.01.2020
(51) Int. Cl.: H01M 4/04, B26F 1/12, B23K 26/36, H01M 2/26, H01M 4/139, H01M 4/13, H01M 10/052

(54) **ELECTRODE AND METHOD FOR MANUFACTURING SAME**

(30) Priority: 09.05.2019 KR 20190054369
(71) Applicant: LG ENERGY SOLUTION, LTD., Seoul 07335 (KR)
(72) Inventor: LEE, Hyeon Jin, Daejeon 34122 (KR); PARK, Dong Hyeuk, Daejeon 34122 (KR); KO, Myoung Jin, Daejeon 34122 (KR); LEE, Hyo Jin, Daejeon 34122 (KR); JO, Sung Jun, Daejeon 34122 (KR)
(74) Representative: Plasseraud IP
(86) International application number: PCT/KR2020/000384
(87) International publication number: WO 2020/226261

(57) **Abstract**

A method for manufacturing an electrode according to an embodiment of the present invention for solving the above problem includes: a step of applying an electrode active material to a portion of an electrode collector to manufacture an electrode sheet on which a non-coating portion that is not coated with the electrode active material is formed on at least one end thereof in a longitudinal direction; a step of setting an ablation line on at least one end contacting the non-coating portion on the active material coating portion coated with the electrode active material; a step of performing ablation on a boundary line between the non-coating portion and the active material coating portion and an area surrounded by the ablation line while maintaining the state, in which the electrode active material is applied; a step of setting a notching line on the ablation area on which the ablation is performed; and a step of performing notching by using the notching line as a boundary.

## Description

### CROSS-REFERENCE TO RELATED APPLICATION

The present application claims the benefit of the priority of Korean Patent Application No. 10-2019-0054369, filed on May 09, 2019, which is hereby incorporated by reference in its entirety.

### TECHNICAL FIELD

The present invention relates to an electrode and a method for manufacturing the same, and more particularly, to an electrode in which a notching speed of an electrode sheet increases to reduce an electrode manufacturing time, and an electrode collector is prevented from being exposed to secure safety, and a method for manufacturing the same.

### BACKGROUND ART

In general, secondary batteries include nickel-cadmium batteries, nickel-hydrogen batteries, lithium ion batteries, and lithium ion polymer batteries. Such a secondary battery is being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In order to manufacture an electrode assembly, a cathode, a separator, and an anode are manufactured and stacked. Specifically, cathode active material slurry is applied to a cathode collector, and anode active material slurry is applied to an anode collector to manufacture a cathode and an anode. Also, when the separator is interposed and stacked between the manufactured cathode and anode, unit cells are formed. The unit cells are stacked on each other to form an electrode assembly. Also, when the electrode assembly is accommodated in a specific case, and an electrolyte is injected, the secondary battery is manufactured.

Each of the electrodes such as the cathode and the anode includes an electrode tab. The electrode tab may be formed by notching a non-coating portion of the electrode sheet, to which an electrode active material is not applied, by using laser. When the laser is irradiated onto the electrode sheet, it is practically difficult to notch only the non-coating portion without any error. As a result, the active material coating part that is coated with the electrode active material has to be notched to some extent. However, the non-coating portion has a thin thickness and thus does not take a long time to be notched by the laser or the like. On the other hand, the active material coating portion coated with the electrode active material has a thick thickness and thus takes a considerable time to be notched by using the laser or the like.

### DISCLOSURE OF THE INVENTION

### TECHNICAL PROBLEM

An object of the present invention for solving the above problems is to provide an electrode in which a notching speed of an electrode sheet increases to reduce an electrode manufacturing time, and an electrode collector is prevented from being exposed to secure safety, and a method for manufacturing the same.

The objects of the present invention are not limited to the aforementioned object, but other objects not described herein will be clearly understood by those skilled in the art from descriptions below.

### TECHNICAL SOLUTION

A method for manufacturing an electrode according to an embodiment of the present invention for solving the above problem includes: a step of applying an electrode active material to a portion of an electrode collector to manufacture an electrode sheet on which a non-coating portion that is not coated with the electrode active material is formed on at least one end thereof in a longitudinal direction; a step of setting an ablation line on at least one end contacting the non-coating portion on the active material coating portion coated with the electrode active material; a step of performing ablation on a boundary line between the non-coating portion and the active material coating portion and an area surrounded by the ablation line while maintaining the state, in which the electrode active material is applied; a step of setting a notching line on the ablation area on which the ablation is performed; and a step of performing notching by using the notching line as a boundary.

In addition, in the step of setting the ablation line, both ends of the ablation line may exist on the boundary line.

In addition, in the step of setting the ablation line, the ablation line may be set to be spaced 0.1 mm to 1.5 mm from the boundary line.

In addition, the ablation line may be set to be spaced 0.1 mm to 1.0 mm from the boundary line.

In addition, in the step of setting the ablation line, at least a portion of the ablation line may be parallel to an edge of the other end of the active material coating portion.

In addition, after the step of performing the ablation, a thickness of the electrode sheet may be reduced by 10% to 90%.

In addition, the thickness of the electrode sheet may be reduced by 30% to 90%.

In addition, in the step of performing the ablation, the ablation may be performed on all both surfaces of the electrode sheet.

In addition, in the step of performing the ablation, the ablation may be performed on only one surface of the electrode sheet.

In addition, in the step of performing the ablation, the ablation may be performed using laser.

In addition, in the step of setting the notching line, at least a portion of the notching line may overlap the ablation line.

An electrode according to an embodiment of the present invention for solving the above problem includes: an active material coating portion formed by applying an electrode active material on a portion of an electrode collector; an electrode tab protruding from the active material coating portion toward one side without being coated with the electrode active material; and an ablation area having a stepped portion at an edge of the active material coating portion in the protruding direction of the electrode tab and coated with the electrode active material.

In addition, at least a portion of the ablation area may be parallel to an edge of the other end of the active material coating portion.

In addition, the ablation area may be formed on all both top and bottom surfaces.

In addition, the ablation area may have a thickness smaller 10% to 90% than that of the active material coating portion.

Particularities of other embodiments are included in the detailed description and drawings.

### ADVANTAGEOUS EFFECTS

The embodiments of the present invention may have at least the following effects.

In the active material coating portion of the electrode sheet, which is coated with the electrode active material, the ablation may be previously performed on the area to be notched so as to reduce the thickness, thereby increasing in notching speed and reducing the electrode manufacturing time.

When the ablation is performed on the area to be notched, the thickness of the electrode active material may be adjusted so as not to remove all of the electrode active material, thereby preventing the electrode collector from being exposed and secure the safety.

The effects of the prevent invention are not limited by the aforementioned description, and thus, more varied effects are involved in this specification.

### BRIEF DESCRIPTION OF THE DRAWINGS

FIG. 1 is a schematic view of an electrode sheet according to an embodiment of the present invention.
FIG. 2 is an enlarged cross-sectional view of the electrode sheet of FIG. 1, taken along line A-A'.
FIG. 3 is a schematic view illustrating a state in which an ablation line is set on the electrode sheet to perform ablation according to an embodiment of the present invention.
FIG. 4 is an enlarged cross-sectional view of the electrode sheet of FIG. 3, taken along line A-A'.
FIG. 5 is a schematic view illustrating a state in which the notching line is set on the electrode sheet according to an embodiment of the present invention.
FIG. 6 is a schematic view illustrating a state in which the electrode sheet is notched along the notching line according to an embodiment of the present invention.
FIG. 7 is an enlarged cross-sectional view of the electrode sheet of FIG. 6, taken along line A-A'.
FIG. 8 is an enlarged cross-sectional view of an electrode sheet, taken along line A-A' according to another embodiment of the present invention.

### MODE FOR CARRYING OUT THE INVENTION

Advantages and features of the present invention, and implementation methods thereof will be clarified through following embodiments described with reference to the accompanying drawings. The present invention may, however be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless terms used in the present invention are defined differently, all terms (including technical and scientific terms) used herein have the same meaning as generally understood by those skilled in the art. Also, unless defined clearly and apparently in the description, the terms as defined in a commonly used dictionary are not ideally or excessively construed as having formal meaning.

In the following description, the technical terms are used only for explaining a specific exemplary embodiment while not limiting the present invention. In this specification, the terms of a singular form may include plural forms unless specifically mentioned. The meaning of "comprises" and/or "including" does not exclude other components besides a mentioned component.

Hereinafter, preferred embodiments will be described in detail with reference to the accompanying drawings.

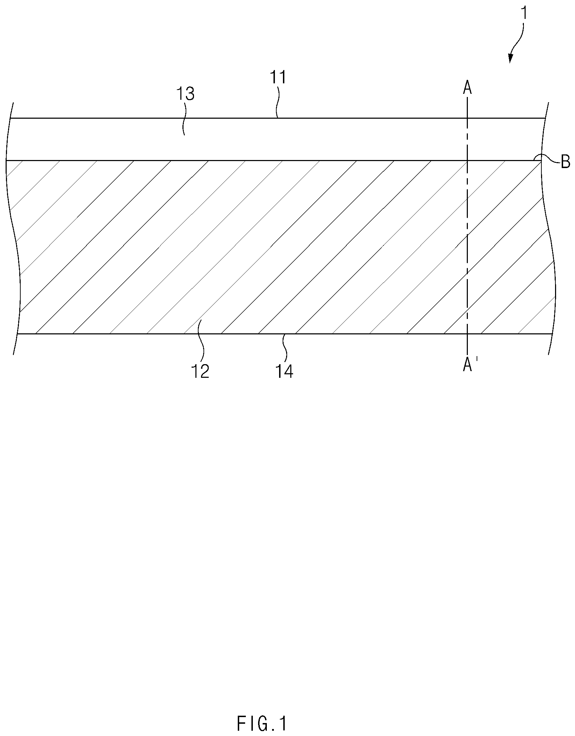

FIG. 1 is a schematic view of an electrode sheet 1 according to an embodiment of the present invention.

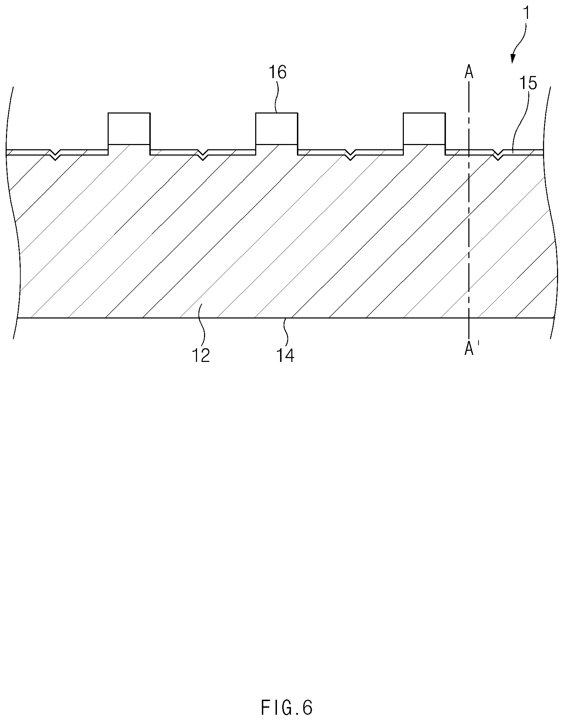

According to an embodiment of the present invention, as described above, slurry in which an electrode active material 12, a binder, and a plasticizer are mixed may be applied to an electrode collector 11 and then dried and pressed to manufacture the electrode sheet 1 as illustrated in FIG. 1. At this time, if necessary, the slurry may further include a filler. Also, notching may be performed on the electrode sheet 1 by using laser to form an electrode tab 16 (see FIG. 6), and the electrode sheet 1 may be cut at certain intervals to manufacture electrodes.

A cathode collector generally has a thickness of 3 µm to 500 µm. The cathode collector is usually made of a material having high conductivity without causing a chemical change. Such a material may be surface-treated with, for example, stainless steel, aluminum, nickel, titanium, calcined carbon, or aluminum or stainless steel on which carbon, nickel, titanium, silver, or the like is surface-treated on a surface thereof, but is not limited thereto. Also, the cathode collector may form a fine unevenness on a surface of the cathode collector to increase in adhesion of a cathode active material. Also, the cathode collector may have various shapes such as a film, a sheet, a foil, a net, a porous body, a foam, a non-woven fabric, and the like.

In a case of a lithium secondary battery, the cathode active material may include, for example, a layered compound of lithium cobalt oxide (LiCoO₂), lithium nickel oxide (LiNiO₂), etc., or a substituted compound with one or more transition metals; lithium manganese oxide such as Li₁₊ₓMn₂₋ₓO₄ (x is 0 to 0.33), LiMnO₃, LiMn₂O₃, LiMnO₂, etc.; lithium copper oxide (Li₂CuO₂); vanadium oxide such as LiV₃O₈, LiFe₃O₄, V₂O₅, Cu₂V₂O₇, etc.; Ni site-type lithium nickel oxide represented by Chemical Formula of LiNi₁₋ₓMₓO₂ (M=Co, Mn, Al, Cu, Fe, Mg, B or Ga, and x=0.01 to 0.3); lithium manganese complex oxide represented by Chemical Formula LiMn₂₋ₓMₓO₂ (M=Co, Ni, Fe, Cr, Zn or Ta, and x=0.01 to 0.1) or Li₂Mn₃MO₈ (M=Fe, Co, Ni, Cu or Zn) ; LiMn₂O₄ in which a portion of Li is substituted with alkaline earth ions; a disulfide compound; Fe₂(MoO₄)₃, and the like. However, this embodiment is not limited thereto.

A conductive agent is generally added at 1 wt% to 50 wt% based on the total weight of the mixture including the cathode active material. The conductive agent is usually made of a material having conductivity without causing a chemical change. The conductive agent may include, for example, conductive materials such as: graphite such as natural graphite and artificial graphite; carbon black such as acetylene black, Ketjen black, furnace black, channel black, lamp black, and thermal black; conductive fiber such as carbon fiber and metal fiber; metal powder such as carbon fluorine, aluminum, and nickel powder; conductive whisker such as zinc oxide and potassium titanate; conductive oxide such as titanium oxide; or polyphenylene derivatives.

The binder is a component assisting the bonding of the active material to the conductive agent and the bonding to the collector and is commonly added at 1 wt% to 50 wt% based on the total weight of the mixture including the cathode active material. Examples of the binder may include polyfluoro vinylidene, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene polymer (EPDM), sulfonated EPDM, styrene butadiene rubber, fluorine rubber, various copolymers, and the like.

The filler is optionally used as a component that inhibits expansion cathode. Also, a general filler may be used if the filler is a fibrous material without causing the chemical change. Examples of the filler may include olefin polymers such as polyethylene and polypropylene; and fibrous materials such as glass fibers and carbon fibers.

The anode may be manufactured by, for example, applying the anode active material to the anode collector and then drying and pressing the anode active material. If necessary, the anode active material may optionally include the conductive agent, the binder, the filler, and the like. The anode may be manufactured in a sheet shape and mounted on a roll.

The anode collector generally has a thickness of 3 µm to 500 µm. The anode collector is usually made of a material having conductivity without causing a chemical change. Examples of the anode material include copper, stainless steel, aluminum, nickel, titanium, calcined carbon, copper or stainless steel on which carbon, nickel, titanium, silver, or the like is surface-treated on a surface thereof, or aluminum-cadmium alloys. Also, the anode collector may form a fine unevenness on the surface of the anode collector to increase in bonding force of the anode active material. Also, the anode collector may have various shapes such as a film, a sheet, a foil, a net, a porous body, a foam, or a non-woven fabric.

The anode active material may include, for example, carbon such as non-graphitized carbon, graphite-based carbon, etc.; a metal complex oxide such as LiₓFe₂O₃ (0≤x≤1), LiₓWO₂ (0 ≤x≤1), SnₓMe₁₋ₓMe'yOz (Me: Mn, Fe, Pb, Ge; Me': Al, B, P, Si, elements found in Group 1, Group 2 and Group 3 in a periodic table, halogen; 0<x≤1; 1≤y≤3; 1≤z≤8), etc.; a lithium metal; a lithium alloy; a silicon-based alloy; a tin-based alloy; a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, etc.; a conductive polymer such as polyacetylene, etc.; Li-Co-Ni-based material, and the like.

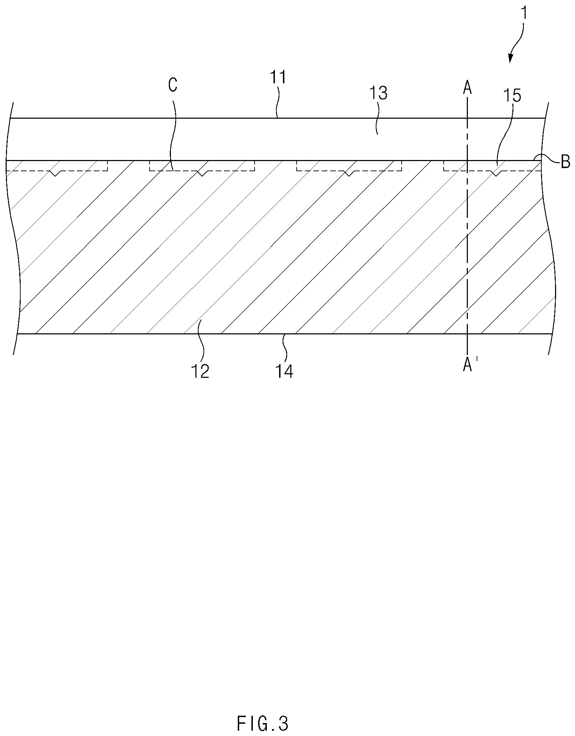

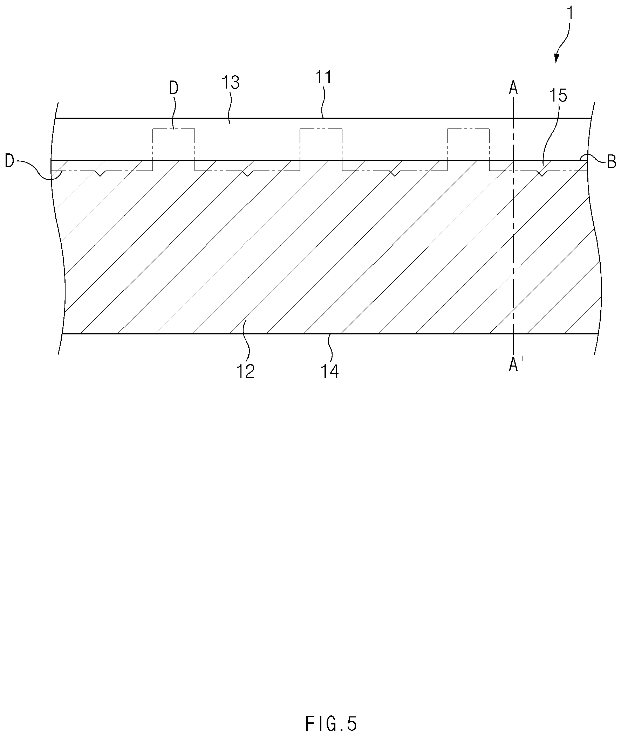

The electrode sheet 1 according to an embodiment of the present invention may be a cathode sheet, but is not limited thereto. For example, the electrode sheet 1 may be an anode sheet. A method for manufacturing an electrode according to an embodiment of the present invention includes: a step of applying an electrode active material 12 to a portion of an electrode collector 11 to manufacture an electrode sheet 1 on which a non-coating portion 13 that is not coated with the electrode active material 12 is formed on at least one end thereof in a longitudinal direction; a step of setting an ablation line C (see FIG. 3) on at least one end contacting the non-coating portion 13 on an active material coating portion 14 coated with the electrode active material 12; a step of performing ablation on a boundary line B between the non-coating portion 13 and the active material coating portion 14 and an area surrounded by the ablation line C while maintaining the state, in which the electrode active material 12 is applied; a step of setting a notching line D (see FIG. 5) on the ablation area 15 on which the ablation is performed; and a step of performing notching by using the notching line D as a boundary.

First, the electrode active material 12 is applied to a portion of the electrode collector 11 having a long length in a direction of one side thereof to manufacture the electrode sheet 1. Here, as illustrated in FIG. 1, it is preferable that the electrode active material 12 is applied so that the non-coating portion 13 that is not coated with the electrode active material 12 is formed lengthily on at least one end of the electrode sheet 1 in the longitudinal direction.

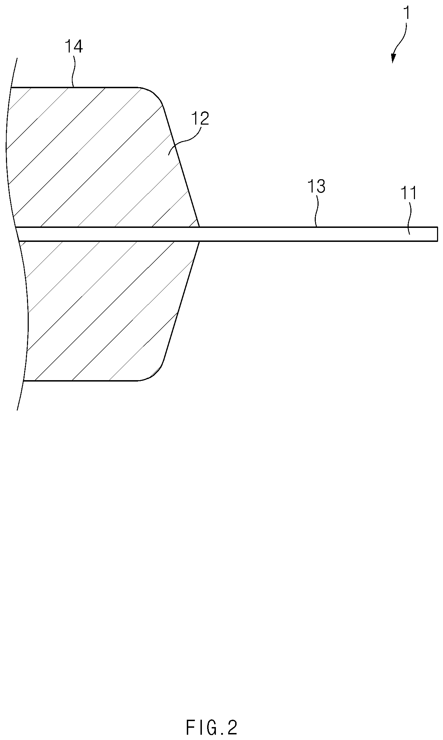

FIG. 2 is an enlarged cross-sectional view of the electrode sheet 1 of FIG. 1, taken along line A-A'.

According to an embodiment of the present invention, the electrode active material 12 may be applied to all both surfaces of the electrode collector 11. Accordingly, as illustrated in FIG. 2, the active material coating portion 14 may be formed on all both the surfaces of the electrode collector 11.

When the secondary battery is exposed at a high temperature or abnormally operates due to internal/external short circuit, overcharging, or overdischarging, a separator is contracted due to generated heat, and thus, the cathode and the anode directly contact each other to cause the short circuit. Due to the short circuit, a large amount of gas may be generated at a high speed in a short time, and a high temperature rise may occur. Furthermore, large explosion may occur to lead to a major accident. In general, the case of the contact between the cathode and the anode may be divided into four major cases such as a case in which the cathode collector and the anode collector contact each other, a case in which the cathode collector and the anode active material contact each other, a case in which the cathode active material and the anode collector contact each other, and a case in which the cathode active material and the anode active material contact each other.

Among them, generally, when the cathode collector and the anode active material contact each other, an amount of generated heat is the highest to quickly reach the highest temperature, thereby maximally increasing in risk of explosion. Thus, the contact between the cathode collector and the anode active material is known as the most dangerous contact.

The manufactured electrode sheet 1 includes the non-coating portion 13, on which the electrode collector 11 is exposed as it is because the electrode active material 12 is not applied, and the active material coating portion 14 coated with the electrode active material 12. Also, the non-coating portion 13 of the electrode sheet 1 is notched to form an electrode tab 16 (see FIG. 6). Here, since the non-coating portion 13 and the active material coating portion 14 are divided into whether the electrode active material 12 is applied, the boundary line B exists. However, since the electrode active material 12 is applied in the form of slurry and then cured, the boundary line B is not easily formed in an accurate straight line even if the boundary line B is a straight line in design. Also, even if the boundary line B is actually formed in the straight line, it is also not easy to allow laser to move accurately along the boundary line B so as to perform the notching. Thus, when irradiating the laser or the like on the electrode sheet 1, it is practically difficult to notch only the non-coating portions 13 without any error. However, if only the non-coating portion 13 is to be notched by using the laser, the non-coating portion 13 may not be completely removed, and thus, the electrode collector 11 may be exposed after the electrode is manufactured.

If the electrode sheet 1 is the cathode sheet, and only the non-coating portion 13 is notched using the laser as described above, the cathode collector may be exposed after the electrode is manufactured. As a result, there is a problem that stability falls, for example, the cathode collector and the anode active material contact each other to cause large explosion. Thus, when notching is performed using the laser, it is preferable to perform the notching in a state of including the active material coating portion 14 to some extent.

Since the non-coating portion 13 is an area on which the electrode collector 11 is exposed as it is, a thickness of the non-coating portion 13 is relatively very thin, and thus, it does not take a long time for performing the notching by using the laser or the like. However, since the active material coating portion 14 is an area on which the electrode active material 12 is applied to the electrode collector 11, a thickness of the active material coating portion 14 is relatively very thick, and thus, a considerable time is required for performing the notching by using the laser or the like.

FIG. 3 is a schematic view illustrating a state in which the ablation line C is set on the electrode sheet 1 to perform the ablation according to an embodiment of the present invention.

According to an embodiment of the present invention, the ablation is first performed without performing the laser notching immediately after the electrode sheet 1 is manufactured. The ablation means surface treatment, particularly, ablation or wear of the electrode using the laser or the like. In order to perform the ablation, as illustrated in FIG. 3, the ablation line C is set on at least one end of the active material coating portion 14 that contacts the non-coating portion 13. The ablation line C may be actually illustrated on the electrode sheet 1 so that the user visually confirm the ablation line C, but the ablation line C may also be virtually set to perform the laser notching.

The boundary line B between the non-coating portion 13 and the active material coating portion 14 and the area surrounded by the ablation line C is ablation areas 15 on which the ablation will be performed later. Therefore, since the ablation line C and the boundary line B have to form a single closed curve together, it is preferable that both ends of the ablation line C exist above the boundary line B.

The ablation area 15 is preferably very narrow. If the ablation area 15 is excessively wide, it is because the active material coating portion 14 decreases in surface area to reduce energy density of the secondary battery. Therefore, the ablation line C is preferably set to be spaced 0.1 mm to 1.5 mm from the boundary line B, and more preferably set to be spaced 0.1 mm to 1.0 mm from the boundary line B.

At least a portion of the ablation line C may overlap a notching line D to be set later. Therefore, in order to manufacture a rectangular electrode, it is preferable that at least a portion of the ablation line C is parallel to an edge of the other end of the active material coating portion 14. That is, referring to FIG. 3 as an example, if the ablation line C is set on an upper area of the active material coating portion 14, it is preferable to be parallel to a lower edge of the active material coating portion 14.

In addition, the ablation line C is not set on the area of the active material coating portion 14, which contacts an area of the non-coating portion 13 on which the electrode tab 16 is to be formed after the notching. Also, the ablation line C is set on the area of the active material coating portion 14, which contacts the area of the non-coating portion 13 to be removed, without forming the electrode tab 16 after the notching. Therefore, it is preferable that both ends of the ablation line C exist between the area on which the electrode tab 16 is to be formed and the area to be removed in the non-coating portion 13.

Furthermore, the electrode sheet 1 is cut later at regular intervals to manufacture the electrode. In order to indicate the position at which the electrode is to be cut, a mark having a triangular shape is formed on the notching line D. Thus, it is preferable that the mark having the triangular shape is formed also on the ablation line C. In addition, a plurality of ablation lines C may be formed and may be repeatedly set at regular intervals.

When the setting of the ablation line C is completed, the ablation is performed on the ablation area 15 surrounded by the ablation line C and the boundary line B.

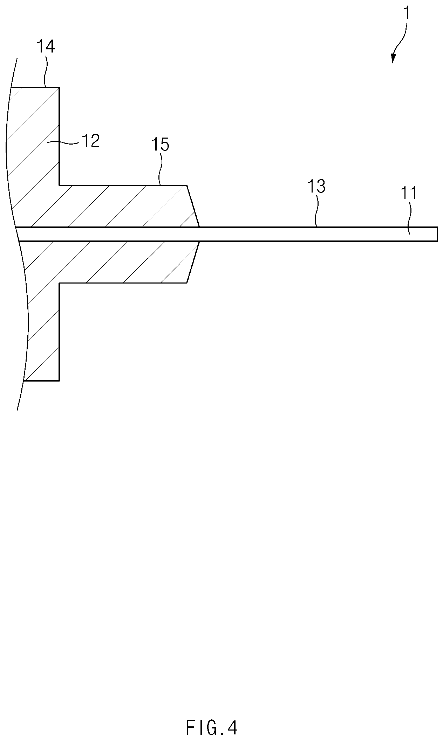

FIG. 4 is an enlarged cross-sectional view of the electrode sheet 1 of FIG. 3, taken along line A-A'.

If the electrode active material 12 is completely removed from the ablation area 15 by performing the ablation, the electrode collector 11 may be exposed after the electrode is manufactured. As a result, the electrode collector 11 and the electrode active material 12 may contact each other, particularly, if the electrode sheet 1 is the cathode sheet, the cathode collector and the anode active material may contact each other to cause large explosion, thereby deteriorating stability.

Therefore, when the ablation is performed on the ablation area 15, the electrode active material 12 has to be maintained in the state of being coated with the electrode active material 12 as illustrated in FIG. 4. That is, it is necessary to prevent the electrode collector 11 from being exposed because the electrode active material 12 is not completely removed.

After the ablation is performed, the thickness is preferably reduced by 10% to 90% than before the ablation is performed, and more preferably, the thickness is reduced by 30% to 90% than before the ablation is performed. As described above, in the active material coating portion 14, the ablation is performed on the area to be previously notched to decrease in thickness, thereby increasing in notching speed and saving an electrode manufacturing time.

According to an embodiment of the present invention, since the electrode active material 12 is applied to both surfaces of the electrode collector 11, it is preferable to perform the ablation on both surfaces of the electrode sheet 1. In order to perform the ablation, the laser may be used. The laser may also be used to perform the notching later. Here, an intensity of the laser emitted from the same laser transmitter may be adjusted. That is, the ablation may be performed by relatively weakly adjusting the intensity of the laser, and the notching may be performed by relatively strongly adjusting the intensity of the laser.

FIG. 5 is a schematic view illustrating a state in which the notching line D is set on the electrode sheet 1 according to an embodiment of the present invention.

After the ablation is completely performed, the notching line D is set on the ablation area 15. The notching line D may be entirely set as long as the ablation area 15 has a thin thickness. In particular, as described above, at least a portion of the notching line D may overlap the ablation line C. Furthermore, the notching line D on the active material coating portion 14 may overlap the ablation lines C in the same manner. However, the notching line D may be set on the non-coating portion 13. If both ends of the ablation line C exist on the boundary line B between the non-coating portion 13 and the active material coating portion 14, the notching line D extends from both the ends of the ablation line C toward the non-coating portion 13 so as to be connected to each other. Thus, unlike the ablation line C is set in plurality, the notching line D may be set continuously without interruption on the electrode sheet 1.

The area surrounded by the notching line D and the boundary line B in the non-coating portion 13 is an area that will be provided as the electrode tab 16 when the notching is performed later. Therefore, the notching line D on the non-coating portion 13 may be set in a shape corresponding to a shape of the electrode tab 16. If the electrode tab 16 has a quadrangular shape, the notching line D on the non-coating portion 13 may also be set in a quadrangular shape.

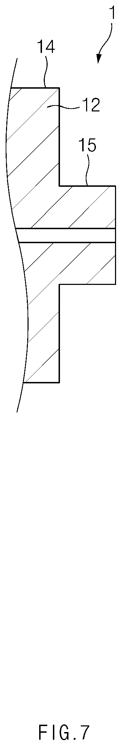

FIG. 6 is a schematic view illustrating a state in which the electrode sheet 1 is notched along the notching line D according to an embodiment of the present invention, and FIG. 7 is an enlarged cross-sectional view of the electrode sheet 1 of FIG. 6, taken along line A-A'.

When the notching is performed along the notching line D, a portion of the electrode sheet 1 is removed as illustrated in FIG. 6. Also, the electrode sheet 1 may be cut later at regular intervals to manufacture the electrodes.

As described above, the laser may be used even when the notching is performed, like the ablation. Here, the ablation may be performed by relatively weakly adjusting the intensity of the laser, which is irradiated from the same laser transmitter, and the notching may be performed by relatively strongly adjusting the intensity of the laser.

The area of the electrode sheet 1, which is removed by the notching is the non-coating portion 13 and the ablation area 15 except for the electrode tab 16. When the notching is performed along the notching line D, the ablation area 15 may remain to some extent as illustrated in FIG. 6. Particularly, when the user intentionally sets the notching line D on an approximately center area of the ablation area 15, i.e., sets the notching line D outward from the ablation line C, the ablation area 15 remains to some extent. Alternatively, the user intends to set the notching line D so that at least a portion of the notching line D overlaps the ablation line C. However, actually, even when the laser does not accurately move along the notching line D to cause an error, the ablation area 15 may remain. However, according to an embodiment of the present invention, since the ablation area 15 is maintained in the state of being coated with the electrode active material 12, even if the ablation area 15 remains to some extent, the electrode collector 11 may be prevented from being exposed to secure the safety.

On the other hand, the user intends to set the notching line D so that at least a portion of the notching line D overlaps the ablation line C, and in fact, if the laser moves accurately along the notching line D without the error, the ablation area 15 may be completely removed without remaining. Even in this case, since the ablation area 15 does not exist, the safety may be secured regardless of whether the electrode collector 11 is exposed.

As described above, the mark having the triangular shape is formed on the notching line D to indicate a position at which the electrode is to be cut. In addition, after the notching is performed, the electrode sheet 1 may be cut later at regular intervals to manufacture the electrodes. As described above, the electrode manufactured through the method for manufacturing the electrode according to an embodiment includes: an active material coating portion 14 formed by applying an electrode active material 12 on a portion of an electrode collector 11; an electrode tab 16 protruding from the active material coating portion 14 toward one side without being coated with the electrode active material 12; and an ablation area 15 having a stepped portion at an edge of the active material coating portion 14 in the protruding direction of the electrode tab 16 and coated with the electrode active material 12. Also, at least a portion of the ablation area 15 may be parallel to the other edge of the active material coating portion 14 and may be formed on both surfaces. In addition, the ablation area 15 preferably has a thickness less 10% to 90% than that of the active material coating portion 14, and more preferably, less 30% to 90% than that of the active material coating portion 14.

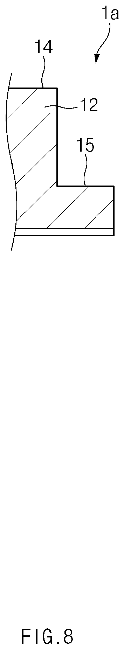

FIG. 8 is an enlarged cross-sectional view of an electrode sheet la, taken along line A-A' according to another embodiment of the present invention.

According to an embodiment of the present invention, an electrode active material 12 may be applied to all both surfaces of an electrode collector 11. Thus, the active material coating portion 14 may be formed on all both surfaces of the electrode collector 11. In addition, since the electrode active material 12 is applied to both the surfaces of the electrode collector 11, it is preferable to perform ablation on both surfaces of the electrode sheet 1a.

However, according to another embodiment of the present invention, as illustrated in FIG. 8, if the electrode active material 12 is applied to only one surface of the electrode collector 11, the active material coating portion 14 may be formed on only one surface of the electrode collector 11. As a result, the ablation may be performed on only one surface of the electrode sheet 1a, on which the active material coating portion 14 is formed, to reduce a thickness of the ablation area 15 of the electrode sheet 1a. Even at this time, the ablation area 15 has to still remain in the state of being coated with the electrode active material 12.

However, the present invention is not limited thereto. Although the electrode active material 12 is applied to both the surfaces of the electrode collector 11, the ablation may be performed on only the one surface of the electrode sheet 1a. That is, regardless of the surface on which the electrode active material 12 is applied to the electrode collector 11, according to another embodiment of the present invention, the ablation may be performed on only the one surface of the electrode sheet 1a.

Those with ordinary skill in the technical field of the present invention pertains will be understood that the present invention can be carried out in other specific forms without changing the technical idea or essential features. Therefore, the above-disclosed embodiments are to be considered illustrative and not restrictive. Accordingly, the scope of the present invention is defined by the appended claims rather than the foregoing description and the exemplary embodiments described therein. Various modifications made within the meaning of an equivalent of the claims of the invention and within the claims are to be regarded to be in the scope of the present invention.

## Claims

1. A method for manufacturing an electrode, the method comprising:
a step of applying an electrode active material to a portion of an electrode collector to manufacture an electrode sheet on which a non-coating portion that is not coated with the electrode active material is formed on at least one end thereof in a longitudinal direction;
a step of setting an ablation line on at least one end contacting the non-coating portion on the active material coating portion coated with the electrode active material;
a step of performing ablation on a boundary line between the non-coating portion and the active material coating portion and an area surrounded by the ablation line while maintaining the state, in which the electrode active material is applied;
a step of setting a notching line on the ablation area on which the ablation is performed; and
a step of performing notching by using the notching line as a boundary.

2. The method of claim 1, wherein, in the step of setting the ablation line, both ends of the ablation line exist on the boundary line.

3. The method of claim 1, wherein, in the step of setting the ablation line, the ablation line is set to be spaced 0.1 mm to 1.5 mm from the boundary line.

4. The method of claim 3, wherein the ablation line is set to be spaced 0.1 mm to 1.0 mm from the boundary line.

5. The method of claim 1, wherein, in the step of setting the ablation line, at least a portion of the ablation line is parallel to an edge of other end of the active material coating portion.

6. The method of claim 1, wherein, after the step of performing the ablation, a thickness of the electrode sheet is reduced by 10% to 90%.

7. The method of claim 6, wherein the thickness of the electrode sheet is reduced by 30% to 90%.

8. The method of claim 1, wherein, in the step of performing the ablation, the ablation is performed on all both surfaces of the electrode sheet.

9. The method of claim 1, wherein, in the step of performing the ablation, the ablation is performed on only one surface of the electrode sheet.

10. The method of claim 1, wherein, in the step of performing the ablation, the ablation is performed using laser.

11. The method of claim 1, wherein, in the step of setting the notching line, at least a portion of the notching line overlaps the ablation line.

12. An electrode comprising:
an active material coating portion formed by applying an electrode active material on a portion of an electrode collector;
an electrode tab protruding from the active material coating portion toward one side without being coated with the electrode active material; and
an ablation area having a stepped portion at an edge of the active material coating portion in the protruding direction of the electrode tab and coated with the electrode active material.

13. The electrode of claim 12, wherein at least a portion of the ablation area is parallel to an edge of the other end of the active material coating portion.

14. The electrode of claim 12, wherein the ablation area is formed on all both top and bottom surfaces.

15. The electrode of claim 12, wherein the ablation area has a thickness smaller 10% to 90% than that of the active material coating portion.
